# EUROPÄISCHE PATENTSCHRIFT

(11) **EP 4 281 224 B1**
(45) Veröffentlichungstag und Bekanntmachung des Hinweises auf die Patenterteilung: **06.08.2025**
(21) Anmeldenummer: 22700791.1
(22) Anmeldetag: 17.01.2022
(51) Int. Cl.: B05B 5/16, B05B 13/04, B25J 11/00, B25J 13/08, B25J 19/00, B25J 19/06, B05B 12/00

(54) **BESCHICHTUNGSEINRICHTUNG, INSBESONDERE LACKIERROBOTER**
COATING DEVICE, IN PARTICULAR PAINTING ROBOT
DISPOSITIF DE REVÊTEMENT, NOTAMMENT ROBOT DE PEINTURE

(30) Priorität: 19.01.2021 DE 102021101027
(43) Veröffentlichungstag der Anmeldung: 29.11.2023
(73) Patentinhaber: Dürr Systems AG, 74321 Bietigheim-Bissingen (DE)
(72) Erfinder: POPPE, Siegfried, 71706 Unterriexingen (DE); HÖCHSMANN, Johannes, 71679 Asperg (DE); KEILBACH, Martin, 74214 Oberkessach (DE)
(74) Vertreter: v. Bezold & Partner Patentanwälte - PartG mbB
(86) Internationale Anmeldenummer: PCT/EP2022/050835
(87) Internationale Veröffentlichungsnummer: WO 2022/157095

(56) Entgegenhaltungen:
- EP-A1- 3 812 849
- EP-A2- 1 232 799
- EP-A2- 3 208 051
- WO-A1-2008/037456
- DE-A1- 10 309 143
- DE-A1- 102005 042 336
- US-A1- 2007 057 082
- US-A1- 2019 022 683

## Beschreibung

Die Erfindung betrifft eine Beschichtungseinrichtung mit einem Lackierroboter zur Beschichtung von Bauteilen (z.B. Kraftfahrzeugkarosseriebauteile) mit einem Beschichtungsmittel (z.B. Lack).

In modernen Lackieranlagen zur Lackierung von Kraftfahrzeugkarosseriebauteilen werden üblicherweise mehrachsige Lackierroboter eingesetzt, die als Applikationsgerät einen Rotationszerstäuber führen. Zur Erreichung eines hohen Auftragswirkungsgrads bzw. zur Minimierung des sogenannten Overspray wird hierbei in der Regel eine elektrostatische Beschichtungsmittelaufladung eingesetzt. Dies bedeutet, dass der applizierte Lack elektrostatisch auf Hochspannungspotenzial aufgeladen wird, während die zu lackierenden Kraftfahrzeugkarosserie elektrisch geerdet sind. Der applizierte Sprühstrahl des Lacks wird deshalb elektrostatisch von den elektrisch geerdeten Kraftfahrzeugkarosserien angezogen, wodurch der Auftragswirkungsgrad erhöht und der Overspray entsprechend verringert wird. Problematisch hierbei ist jedoch die elektrische Potenzialtrennung zwischen dem elektrisch geerdeten Teil des Lackierroboters einerseits und dem unter Hochspannung stehenden Teil des Lackierroboters andererseits. Beispielsweise kann diese Potenzialtrennung in einem der Roboterarme des Lackierroboters erfolgen.

Derartige Lackierroboter bzw. die von dem Lackierroboter geführten Rotationszerstäuber weisen üblicherweise mehrere Sensoren auf, wie beispielsweise Drucksensoren oder Drehzahlsensoren. Diese Sensoren sind teilweise auch in dem Teil des Lackierroboters angeordnet, der sich auf Hochspannungspotenzial befindet. Die Datenübertragung der Messwerte von den Sensoren in dem unter Hochspannung stehenden Teil des Lackierroboters zu dem elektrisch geerdeten Teil des Lackierroboters muss deshalb eine Potenzialtrennung beinhalten. Hierfür werden deshalb im Stand der Technik Lichtwellenleiter eingesetzt.

Ein Problem bei solchen Lackierrobotern mit einer elektrostatischen Beschichtungsmittelaufladung und mehreren Sensoren besteht in der Stromversorgung der elektrisch betriebenen Sensoren in dem unter Hochspannung stehenden Teil des Lackierroboters. Hierzu werden im Stand der Technik jeweils Batterien für die einzelnen Sensoren vorgesehen, was jedoch mit verschiedenen Nachteilen verbunden ist. So müssen die Batterien relativ häufig ausgewechselt werden, was mit Kosten für den Batterietausch verbunden ist und auch Ressourcen verbraucht.

Ein weiteres Problem besteht darin, dass die einzelnen Sensoren zur Datenübertragung über den Lichtwellenleiter jeweils einen opto-elektronischen Wandler benötigen, was relativ aufwendig ist., da entsprechend viele opto-elektronische Wandler benötigt werden.

Darüber hinaus benötigen die einzelnen Sensoren üblicherweise jeweils einen Lichtwellenleiter, was ebenfalls aufwendig ist.

Zum technischen Hintergrund der Erfindung ist auch hinzuweisen auf DE 103 09 143 A1, EP 3 812 849 A1, EP 3 208 051 A2, EP 1 232 799 A2, US 2019/022683 A1, DE 10 2005 042336 A1 und US 2007/057082 A1.

Schließlich offenbart WO 2008/037456 A1 eine Beschichtungseinrichtung gemäß dem Oberbegriff von Anspruch 1. Diese bekannte Beschichtungseinrichtung ist jedoch noch nicht vollständig befriedigend.

Der Erfindung liegt deshalb die Aufgabe zugrunde, eine entsprechend verbesserte Beschichtungseinrichtung zu schaffen.

Diese Aufgabe wird durch eine erfindungsgemäße Beschichtungseinrichtung gemäß dem Hauptanspruch gelöst.

Die Erfindung umfasst die allgemeine technische Lehre, in dem unter Hochspannung stehenden Bereich der Beschichtungseinrichtung eine Sammeleinrichtung anzuordnen, die mit den einzelnen Sensoren verbunden ist und die Messwerte der Sensoren sammelt und überträgt. Dies ermöglicht vorteilhaft eine zentrale Stromversorgung der Sensoren durch die Sammeleinrichtung und auch eine gebündelte Datenübertragen der Messwerte der Sensoren durch die Sammeleinrichtung.

Die erfindungsgemäße Beschichtungseinrichtung umfasst zunächst in Übereinstimmung mit dem eingangs beschriebenen Stand der Technik einen Schutzbereich, der im Betrieb unter Hochspannung steht, wie es beispielsweise bei einer elektrostatischen Beschichtungsmittelaufladung der Fall ist. So kann der Schutzbereich beispielsweise auf einem Potenzial von mehr als 1 kV, 5 kV, 10 kV, 20 kV oder mehr als 50 kV liegen.

Der im Rahmen der Erfindung verwendete Begriff eines Schutzbereichs setzt jedoch nicht zwingend voraus, dass der Schutzbereich im Betrieb unter Hochspannung steht. Es besteht jedoch alternativ auch die Möglichkeit, dass es sich bei dem Schutzbereich um einen explosionsgeschützten Bereich handelt. Der Explosionsschutz für Maschinenteile oder Bereiche von Maschinen ist an sich aus dem Stand der Technik bekannt und beispielsweise in den technischen Normen-IEC/EN 60079-11-Teil elf, IEC/EN 60079-25-Teil 25 und IEC/EN 60079-14-Teil 14 normiert.

Der im Rahmen der Erfindung verwendete Begriff eines Schutzbereichs kann jedoch auch solche Bereiche der Beschichtungseinrichtung betreffen, die im Betrieb unter Hochspannung stehen und die zusätzlich auch explosionsgeschützt sind.

Weiterhin umfasst die erfindungsgemäße Beschichtungseinrichtung in Übereinstimmung mit dem eingangs beschriebenen Stand der Technik einen ungeschützten Bereich, der nicht explosionsgeschützt ist bzw. im Betrieb auf Erdpotential liegt. Auch der Begriff eines ungeschützten Bereichs kann also im Rahmen der Erfindung verschiedene Bedeutungen haben. So kann der ungeschützte Bereich ein solcher Bereich der Beschichtungseinrichtung sein, der im Betrieb auf Erdpotential liegt, wobei der Explosionsschutz keine Rolle spielt. Es ist jedoch auch möglich, dass der im Rahmen der Erfindung verwendete Begriff eines ungeschützten Bereichs einen solchen Bereich der Beschichtungseinrichtung definiert, der im Betrieb nicht explosionsgeschützt ist, wobei das elektrische Potenzial des ungeschützten Bereichs keine Rolle spielt. Darüber hinaus besteht im Rahmen der Erfindung auch die Möglichkeit, dass der Begriff eines ungeschützten Bereichs solche Bereiche der Beschichtungsanlage definiert, die im Betrieb auf Erdpotential liegen und nicht explosionsgeschützt sind.

Darüber hinaus weist die erfindungsgemäße Beschichtungseinrichtung in Übereinstimmung mit dem eingangs beschriebenen Stand der Technik mehrere Sensoren auf, um Prozessgrößen der Beschichtungseinrichtung zu messen, wobei die Sensoren in dem Schutzbereich angeordnet sind. Beispielsweise kann es sich bei den Sensoren um Drucksensoren oder Drehzahlsensoren handeln, wie noch detailliert beschrieben wird.

Ferner weist die erfindungsgemäße Beschichtungseinrichtung eine Datenschnittstelle (E/A-Converter) auf, um eine externe Datenkommunikation der Beschichtungseinrichtung beispielsweise mit einer Robotersteuerung zu ermöglichen. Die Datenschnittstelle ist hierbei in dem ungeschützten Bereich angeordnet.

Darüber hinaus weist die erfindungsgemäße Beschichtungseinrichtung in Übereinstimmung mit dem eingangs beschriebenen Stand der Technik auch ein Übertragungssystem auf, um Daten zwischen den Sensoren in dem Schutzbereich einerseits und der Datenschnittstelle in dem ungeschützten Bereich andererseits zu übertragen. Beispielsweise kann dieses Übertragungssystem Lichtwellenleiter nutzen, wie bereits eingangs zum Stand der Technik erläutert wurde. Derartige Lichtwellenleiter ermöglichten vorteilhaft eine elektrische Potenzialtrennung zwischen dem Schutzbereich einerseits und dem ungeschützten Bereich andererseits.

Die erfindungsgemäße Beschichtungseinrichtung zeichnet sich nun - wie bereits vorstehend kurz erwähnt - durch eine zentrale Sammeleinrichtung auf, die in dem Schutzbereich angeordnet ist. Einerseits ist diese Sammeleinrichtung mit den Sensoren verbunden und erhält von den Sensoren Messwerte der Prozessgrößen. Andererseits ist die Sammeleinrichtung mit dem Übertragungssystem verbunden, um die Messwerte der Sensoren an die Datenschnittstelle zu übertragen. Die Sammeleinrichtung sammelt also die Messwerte der Sensoren und überträgt diese zu der Datenschnittstelle in dem ungeschützten Bereich.

Zum einen ist diese zentrale Sammeleinrichtung vorteilhaft, weil die einzelnen Sensoren dadurch keine eigene I/O-Schnittstelle (z.B. opto-elektronischer Wandler) benötigen. Es reicht vielmehr aus, wenn die zentrale Sammeleinrichtung eine I/O-Schnittstelle aufweist, die beispielsweise einen opto-elektronischen Wandler enthält und mit einem Lichtwellenleiter verbunden ist.

Zum anderen ist die zentrale Sammeleinrichtung aber auch vorteilhaft, weil dadurch die Stromversorgung der Sensoren vereinfacht werden kann, indem die einzelnen Sensoren von der zentralen Sammeleinrichtung mit der zum Betrieb erforderlichen elektrischen Energie versorgt werden. Die einzelnen Sensoren müssen dann - anders als bei dem eingangs beschriebenen Stand der Technik - keine Batterien mehr enthalten, die häufig ausgewechselt werden müssen.

Es wurde bereits vorstehend kurz erwähnt, dass die einzelnen Sensoren in dem Schutzbereich vorzugsweise mit elektrischer Energie betrieben werden, wobei die zum Betrieb erforderliche elektrische Energie von der Sammeleinrichtung bereitgestellt werden kann. Die Sammeleinrichtung kann die zum Betrieb erforderliche elektrische Energie ihrerseits wiederum von dem Übertragungssystem beziehen, das somit zwei Funktionen hat. Zum einen dient das Übertragungssystem hierbei zur Datenübertragung zwischen der Datenschnittstelle in dem ungeschützten Bereich einerseits und der Sammeleinrichtung in dem geschützten Bereich andererseits. Zum anderen dient das Übertragungssystem hierbei aber auch zur Energieübertragung aus dem ungeschützten Bereich zu der Sammeleinrichtung in dem geschützten Bereich, damit die Sammeleinrichtung dann die einzelnen Sensoren mit der zum Betrieb erforderlichen elektrischen Energie versorgen kann.

In einem anderen Ausführungsbeispiel der Erfindung wird die zum Betrieb der Sensoren erforderliche elektrische Energie dagegen nicht von dem Übertragungssystem zu der Sammeleinrichtung übertragen. Stattdessen kann in dem Schutzbereich eine Stromversorgung (z.B. Batterie) angeordnet sein, welche die Sammeleinrichtung mit der zum Betrieb der Sensoren erforderlichen elektrischen Energie versorgt, wobei die Sammeleinrichtung die Energie dann an die einzelnen Sensoren weiterleitet. Diese Stromversorgung in dem Schutzbereich ist zur Gewährleistung eines Explosionsschutzes vorzugsweise eigensicher ausgeführt, wie es insbesondere in den technischen Normen-IEC/EN 60079-11-Teil elf, IEC/EN 60079-25-Teil 25 und IEC/EN 60079-14-Teil 14 normiert ist.

Es wurde bereits vorstehend kurz erwähnt, dass das Übertragungssystem zur Datenübertragung zwischen der Sammeleinrichtung in dem Schutzbereich einerseits und der Datenschnittstelle in dem ungeschützten Bereich andererseits Lichtwellenleiter aufweisen kann. Der Einsatz von Lichtwellenleitern ermöglicht auch eine elektrische Potenzialtrennung.

Es besteht jedoch alternativ auch die Möglichkeit, dass das Übertragungssystem vollständig leitungslos arbeitet, um die erforderliche elektrische Potenzialtrennung zwischen dem unter Hochspannung stehenden Schutzbereich einerseits und dem auf Erdpotential liegenden ungeschützten Bereich andererseits zu ermöglichen. Beispielsweise kann das Übertragungssystem hierzu eine induktive Kopplung, einer resonant-induktive Kopplung oder eine kapazitive Kopplung einsetzen, um nur einige Beispiele zu nennen.

Hierbei kann das Übertragungssystem dann folgende Bauteile aufweisen:
- Eine Sendespule zur induktiven Kopplung,
- einen Oszillator zur Ansteuerung der Sendespule mit einem Wechselspannungssignal,
- einen senderseitigen Resonanzkreis, der mit der Sendespule gekoppelt ist,
- eine Empfangsspule zur induktiven Kopplung mit der Senderspule,
- einen empfängerseitigen Resonanzkreis, der mit der Empfangsspule gekoppelt ist, und/oder
- einen Gleichrichter zur Gleichrichtung des in die Empfangsspule eingekoppelten Signals.

Das Übertragungssystem kann also sowohl eine drahtlose Energieübertragung als auch eine drahtlose Informationsübertragung ermöglichen. Es ist jedoch alternativ auch möglich, dass das Übertragungssystem nur zur drahtlosen Energieübertragung dient, während die Messdaten der Sensoren leitungsgebunden übertragen werden. Weiterhin besteht alternativ auch die Möglichkeit, dass das Übertragungssystem nur die Sensordaten drahtlos überträgt, während die zum Betrieb der Sensoren erforderliche Energie leitungsgebunden übertragen wird.

Gemäß der Erfindung weist die Beschichtungseinrichtung einen Beschichtungsroboter (z.B. Lackierroboter) auf, der üblicherweise eine serielle Roboterkinematik mit einem proximalen Roboterarm ("Arm 1") und einem distalen Roboterarm ("Arm 2") hat.

Hierbei ist zu erwähnen, dass die Erfindung hinsichtlich des zu applizierenden Beschichtungsmittels nicht auf Lacke beschränkt ist, sondern auch andere Typen von Beschichtungsmitteln umfasst, wie beispielsweise Klebstoff, Dämmstoff, Dichtmittel, etc..

Weiterhin ist zu erwähnen, dass die Erfindung hinsichtlich der zu beschichtenden Bauteile nicht auf Kraftfahrzeugkarosseriebauteile beschränkt ist. Vielmehr ermöglicht die Erfindung auch die Beschichtung anderer Typen von Bauteilen.

Bei dem vorstehend erwähnten Beschichtungsroboter befindet sich in dem distalen Roboterarm eine Isolierstrecke zwischen dem Schutzbereich einerseits und dem ungeschützten Bereich andererseits. Erfindungsgemäß ist diese Isolierstrecke als Trennwand aus Kunststoff ausgebildet.

Weiterhin ist zu erwähnen, dass das Übertragungssystem ganz oder teilweise in dem distalen Roboterarm angeordnet sein kann. Beispielsweise können die vorstehend erwähnten Bauteile (Sendespule, Oszillator, senderseitiger Resonanzkreis, empfängerseitiger Resonanzkreis, Empfangsspule, Gleichrichter) ganz oder teilweise in dem distalen Roboterarm angeordnet sein.

Ferner ist zu erwähnen, dass die Beschichtungseinrichtung zur elektrostatischen Beschichtungsmittelaufladung eine Hochspannungskaskade aufweisen kann, die vorzugsweise in dem proximalen Roboterarm des Beschichtungsroboters angeordnet ist.

Weiterhin besteht im Rahmen der Erfindung die Möglichkeit, dass auch in dem ungeschützten Bereich der Beschichtungseinrichtung mindestens ein Sensor angeordnet ist, wie beispielsweise ein Schwingungssensor.

Hinsichtlich der Sensoren bestehen im Rahmen der Erfindung verschiedene Möglichkeiten. Es wurde bereits vorstehend kurz erwähnt, dass es sich bei den Sensoren um einen Drucksensor oder einen Drehzahlsensor handeln kann. Es besteht jedoch auch die Möglichkeit, dass es sich bei den Sensoren um Strömungssensoren, Kraftsensoren, Beschleunigungssensor, Vibrationssensoren, Temperatursensoren handelt, um nur einige Beispiele zu nennen.

Weiterhin wurde vorstehend bereits erwähnt, dass die Beschichtungseinrichtung in dem ungeschützten Bereich eine Datenschnittstelle aufweist, um eine externe Datenanbindung zu ermöglichen. Beispielsweise kann diese Datenschnittstelle mindestens eine der folgenden Schnittstellentypen bereitstellt:
- Internet-Schnittstelle,
- Bluetooth-Schnittstelle,
- USB-Schnittstelle,
- IO-Link,
- Lichtwellenleiter-Schnittstelle,
- Analog-Schnittstelle, insbesondere zur Übertragung von Temperaturmesswerten,
- Digital-Schnittstelle,
- Ethernet-basierende Feldbussysteme, z.B. EtherCAT, Sercos III, Profinet.

Ferner ist zu erwähnen, dass die Sammeleinrichtung digital mit den einzelnen Sensoren kommunizieren kann.

Weiterhin besteht im Rahmen der Erfindung auch die Möglichkeit, dass in dem ungeschützten Bereich der Beschichtungseinrichtung eine Stromversorgung für die Datenschnittstelle angeordnet ist, wobei diese Stromversorgung zur Gewährleistung eines Explosionsschutzes eigensicher ausgeführt sein kann, wie vorstehend bereits unter Hinweis auf verschiedene technische Normen zum Explosionsschutz erläutert wurde.

Darüber hinaus ist zu bemerken, dass die Beschichtungseinrichtung eine Dosierpumpe aufweisen kann, die das Beschichtungsmittel dosiert und im Betrieb einen bestimmten Eingangsdruck und einen bestimmten Ausgangsdruck aufweist. Die Dosierpumpe kann hierbei in dem Schutzbereich angeordnet sein, wobei Sensoren den Eingangsdruck und/oder den Ausgangsdruck der Dosierpumpe messen. Darüber hinaus kann auch ein Temperatursensor vorgesehen sein, der eine Beschichtungsmitteltemperatur misst, vorzugsweise an oder in der Dosierpumpe.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.
Figur 1 zeigt eine Perspektivansicht eines erfindungsgemäßen Lackierroboters.
Figur 2 zeigt eine schematische Darstellung des Lackierroboters aus Figur 1 mit den verschiedenen Komponenten in den Roboterarmen.
Figur 3 zeigt eine Abwandlung von Figur 2.
Figur 4 zeigt eine weitere Abwandlung von Figur 2 mit einem drahtlosen Übertragungssystem.
Figur 5 zeigt eine schematische Darstellung einer Abwandlung des drahtlosen Übertragungssystems aus Figur 4.
Figur 6A zeigt eine Perspektivansicht einer Dosierpumpe mit einem Druckmessmodul.
Figur 6B zeigt eine Perspektivansicht des Druckmessmoduls der Dosierpumpe aus Figur 6A.

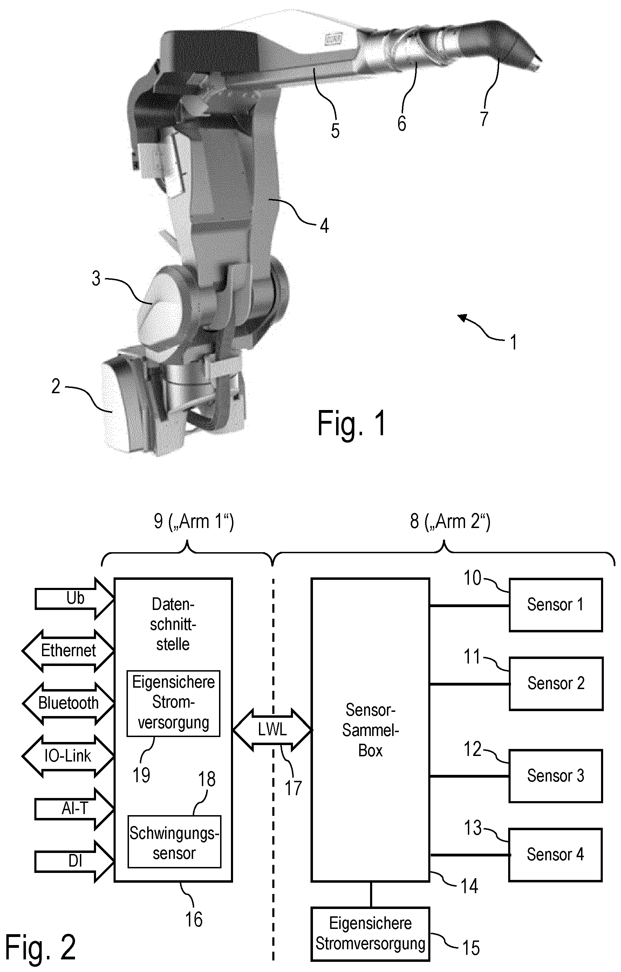

Im Folgenden wird nun zunächst das Ausführungsbeispiel eines erfindungsgemäßen Lackierroboters 1 beschrieben, wie er in den Figuren 1 und 2 dargestellt ist.

Der Lackierroboter 1 ist weitgehend herkömmlich aufgebaut und enthält eine serielle Roboterkinematik mit einer Roboterbasis 2, einem schwenkbaren Roboterglied 3, einem proximalen Roboterarm 4 ("Arm 1"), einem distalen Roboterarm 5 ("Arm 2") und einer mehrachsigen Roboterhandachse 6, wobei an der Roboterhandachse 6 ein Rotationszerstäuber 7 mit einer elektrostatischen Beschichtungsmittelaufladung montiert ist.

Aufgrund der elektrostatischen Beschichtungsmittelaufladung befindet sich ein Bereich des Lackierroboters 1 im Betrieb auf Hochspannungspotenzial. Figur 2 zeigt einen solchen Schutzbereich 8, der im Betrieb auf Hochspannungspotenzial liegt und sich im Wesentlichen über den distalen Roboterarm 5, die Roboterhandachse 6 und den Rotationszerstäuber 7 erstreckt.

Darüber hinaus weist der Lackierroboter 1 einen Bereich auf, der sich auch im Betrieb auf elektrischen Erdpotential befindet und somit nicht aufgeladen ist. Figur 2 zeigt einen solchen ungeschützten Bereich 9, der auf Erdpotential liegt und im Wesentlichen den proximalen Roboterarm 4, das schwenkbare Roboterglied 3 und die Roboterbasis 2 umfasst.

In dem Schutzbereich 8 befinden sich mehrere Sensoren 10, 11, 12, 13, wobei es sich beispielsweise um Drehzahlsensoren, Drucksensoren, Strömungssensoren oder Temperatursensoren handeln kann, um nur einige Beispiele zu nennen. Hierbei ist zu erwähnen, dass die Sensoren 10-13 elektrisch betrieben sind und die zum Betrieb erforderliche elektrische Energie von einer zentralen Sammeleinrichtung 14 erhalten, die in dem Schutzbereich 8 angeordnet ist.

Weiterhin befindet sich in dem Schutzbereich 8 eine eigensichere Stromversorgung 15, die beispielsweise eine elektrische Batterie aufweisen kann. Die eigensichere Stromversorgung 15 liefert Energie an die zentrale Sammeleinrichtung 14, die wiederum die Sensoren 10-13 mit der zum Betrieb erforderlichen elektrischen Energie versorgt. Dies ist vorteilhaft, weil die einzelnen Sensoren 10-13 dann keine eigene Stromversorgung in Form einer Batterie benötigen, die häufig ausgetauscht werden muss.

In dem ungeschützten Bereich 9 des Lackierroboters 1 befindet sich eine Datenschnittstelle 16 (E/A-Converter), die über einen Lichtwellenleiter 17 mit der Sammeleinrichtung 14 verbunden ist. Die Sammeleinrichtung 14 und die Datenschnittstelle 16 enthalten also jeweils einen opto-elektronischen Wandler, um eine Datenübertragung über den Lichtwellenleiter 17 zu ermöglichen.

Im Betrieb sammelt die Sammeleinrichtung 14 die Sensordaten von den Sensoren 10-13 und überträgt diese zentral über den Lichtwellenleiter 17 an die Datenschnittstelle 16.

Die Datenschnittstelle 16 ermöglicht eine externe Datenanbindung über die dargestellten Schnittstellenarten, wie analoge und/oder digitale Schnittstellen (z.B. Ethernet-Bus, Bluetooth, IO-Link, analoge Schnittstelle AI-T, AI, AI/AO, digitale Schnittstelle DI) zur Übertragung von Temperaturdaten.

Ferner kann die Schnittstelle 16 einen Schwingungssensor 18 und eine eigensichere Stromversorgung 19 enthalten.

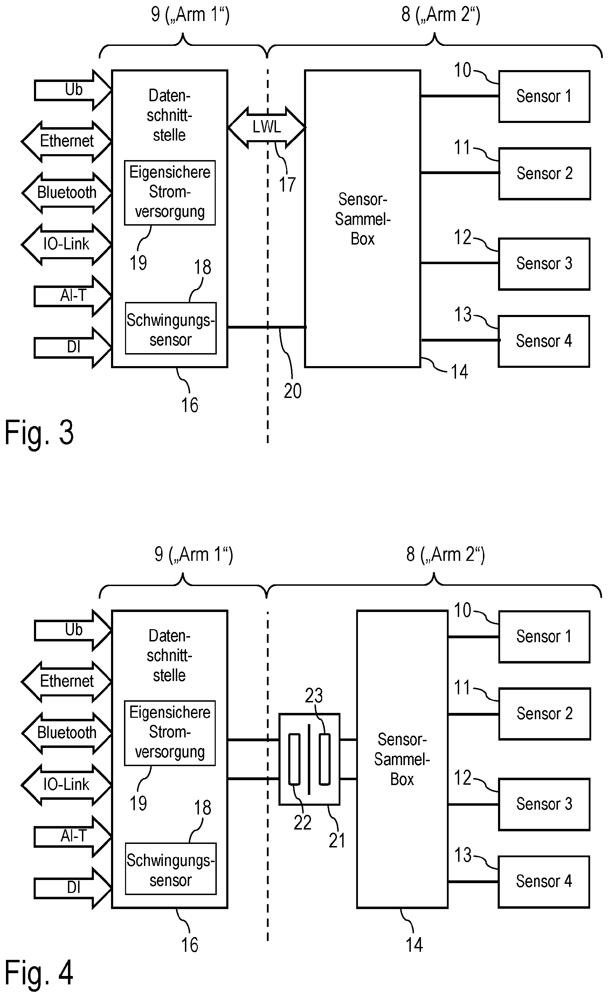

Figur 3 zeigt eine Abwandlung des Ausführungsbeispiels gemäß Figur 2, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass in dem Schutzbereich 8 die in Figur 2 dargestellte eigensichere Stromversorgung 15 fehlt. Stattdessen ist die eigensichere Stromversorgung 19 in dem ungeschützten Bereich 9 über eine Stromleitung 20 mit der Sammeleinrichtung 14 verbunden. Die Sammeleinrichtung 14 erhält die zum Betrieb der Sensoren 10-13 erforderliche elektrische Energie hierbei also über die Stromleitung 20 von der eigensicheren Stromversorgung 19.

Figur 4 zeigt eine weitere Abwandlung der Ausführungsbeispiele gemäß den Figuren 2 und 3, so dass zur Vermeidung von Wiederholungen wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Datenschnittstelle 16 durch ein Übertragungssystem 21 mit einer induktiven Kopplung mit der Sammeleinrichtung 14 verbunden ist. Die Übertragungseinrichtung 21 weist eine Sendespule 22 und eine Empfangsspule 23 auf, die induktiv gekoppelt sind.

Zum einen ermöglicht das Übertragungssystem 21 eine Energieübertragung von der Datenschnittstelle 16 zu der Sammeleinrichtung 14, damit die Sammeleinrichtung 14 die Sensoren 10-13 mit der zum Betrieb erforderlichen elektrischen Energie versorgen kann.

Zum anderen ermöglicht das Übertragungssystem 21 aber auch eine bidirektionale Datenübertragung zwischen der Datenschnittstelle 16 und der Sammeleinrichtung 14, indem den hochfrequenten Signalen Datensignale aufmoduliert werden. Auf diese Weise kann die Sammeleinrichtung 14 die Sensordaten an die Datenschnittstelle 16 übertragen.

Zu den Figuren 1-4 ist zu erwähnen, dass auch eine Abwandlung ohne eine elektrostatische Beschichtungsmittelaufladung möglich ist. Hierbei ist der Schutzbereich 8 ein explosionsgeschützter Bereich, während der ungeschützte Bereich 9 nicht explosionsgeschützt ist.

Darüber hinaus besteht alternativ auch die Möglichkeit, dass der Schutzbereich 8 unter Hochspannung steht und explosionsgeschützt ist, während der ungeschützte Bereich 9 auf Erdpotential liegt und keinen Explosionsschutz aufweist.

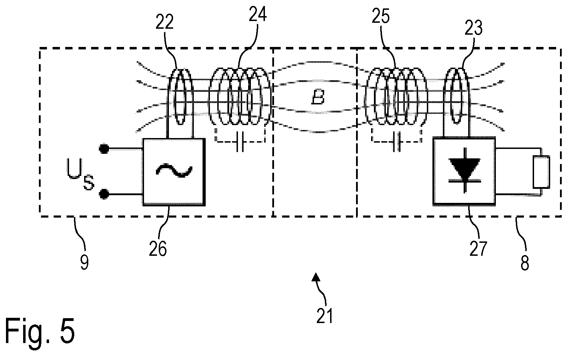

Figur 5 zeigt eine Abwandlung des Übertragungssystems 21 aus Figur 4, so dass zur Vermeidung von Wiederholungen auf die vorstehende Beschreibung verwiesen wird, wobei für entsprechende Einzelheiten dieselben Bezugszeichen verwendet werden.

Eine Besonderheit besteht hierbei darin, dass die Sendespule 22 mit einem senderseitigen Resonanzkreis 24 induktiv gekoppelt ist, während die Empfangsspule 23 mit einem empfängerseitigen Resonanzkreis 25 induktiv gekoppelt ist.

Weiterhin ist in der Zeichnung dargestellt, dass die Sendespule 22 von einem Oszillator 26 angesteuert wird, während die Empfangsspule 23 mit einem Gleichrichter 27 verbunden ist.

In diesem Ausführungsbeispiel arbeitet das Übertragungssystem 21 also mit einer resonant-induktiven Kopplung.

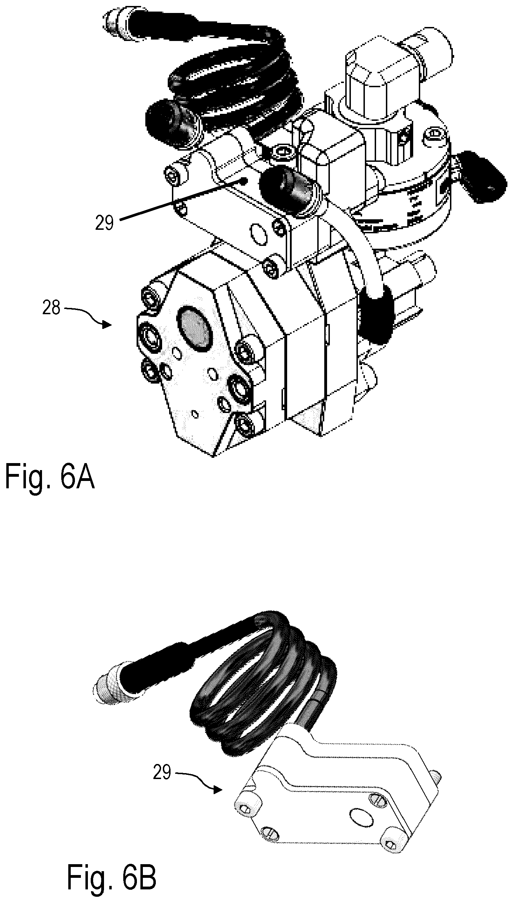

Die Figuren 6A und 6B zeigen Perspektivenansichten einer Dosierpumpe 28, die in dem Schutzbereich 8 angeordnet ist und den zu applizierenden Lack dosiert.

An die Dosierpumpe 28 ist ein Druckmessmodul 29 angebaut, das Drucksensoren zur Druckmessung am Eingang und am Ausgang der Dosierpumpe 28 enthält.

### Bezugszeichenliste:

- 1: Lackierroboter
- 2: Roboterbasis
- 3: Schwenkbares Roboterglied
- 4: Proximaler Roboterarm ("Arm 1")
- 5: Distaler Roboterarm ("Arm 2")
- 6: Roboterhandachse
- 7: Rotationszerstäuber
- 8: Schutzbereich im "Arm 2"
- 9: Ungeschützter Bereich im "Arm 1"
- 10-13: Sensoren
- 14: Sammeleinrichtung
- 15: Eigensichere Stromversorgung im Schutzbereich ("Arm 2")
- 16: Datenschnittstelle
- 17: Lichtwellenleiter zwischen Sammeleinrichtung und Datenschnittstelle
- 18: Schwingungssensor im ungeschützten Bereich
- 19: Eigensichere Stromversorgung im ungeschützten Bereich ("Arm 1")
- 20: Stromleitung von der eigensicheren Stromversorgung im ungeschützten Bereich zu der Sammeleinrichtung in dem geschützten Bereich
- 21: Übertragungssystem zur Energieübertragung aus dem ungeschützten Bereich zu der Sammeleinrichtung in dem geschützten Bereich
- 22: Sendespule
- 23: Empfangsspule
- 24: Senderseitiger Resonanzkreis
- 25: Empfängerseitiger Resonanzkreis
- 26: Oszillator
- 27: Gleichrichter
- 28: Dosierpumpe
- 29: Druckmessmodul mit Drucksensoren am Eingang und am Ausgang der Dosierpumpe

## Patentansprüche

1. Beschichtungseinrichtung (1) zur Beschichtung von Bauteilen mit einem Beschichtungsmittel, mit
a) einem Schutzbereich (8), der explosionsgeschützt ist und/oder im Betrieb unter Hochspannung steht,
b) einem ungeschützten Bereich (9), der nicht explosionsgeschützt ist und/oder im Betrieb auf Erdpotential liegt,
c) mehreren Sensoren (10-13) zur Messung von Prozessgrößen der Beschichtungseinrichtung (1), wobei die Sensoren (10-13) in dem Schutzbereich (8) angeordnet sind,
d) einer Datenschnittstelle (16) zur externen Datenkommunikation, wobei die Datenschnittstelle (16) in dem ungeschützten Bereich (9) angeordnet ist, und
e) einem Übertragungssystem (17, 21) zur Übertragung von Daten zwischen den Sensoren (10-13) in dem Schutzbereich (8) einerseits und der Datenschnittstelle (16) in dem ungeschützten Bereich (9) andererseits,
f) einer Sammeleinrichtung (14), wobei die Sammeleinrichtung (14)
f1) in dem Schutzbereich (8) angeordnet ist,
f2) einerseits mit den Sensoren (10-13) verbunden ist und von den Sensoren (10-13) Messwerte der Prozessgrößen erhält, und
f3) andererseits mit dem Übertragungssystem (17, 21) verbunden ist, um die Messwerte der Sensoren (10-13) an die Datenschnittstelle (16) zu übertragen,
g) einem Beschichtungsroboter (1) mit einem proximalen Roboterarm (4) und einem distalen Roboterarm (5), wobei der Schutzbereich (8) mindestens teilweise in dem distalen Roboterarm (5) angeordnet ist, während der ungeschützte Bereich (9) mindestens teilweise in dem proximalen Roboterarm (4) angeordnet ist, und
h) einer Isolierstrecke in dem distalen Roboterarm (5) zwischen dem Schutzbereich (8) und dem ungeschützten Bereich (9),
**dadurch gekennzeichnet,**
i) **dass** die Isolierstrecke eine Trennwand aus Kunststoff ist.

2. Beschichtungseinrichtung (1) nach Anspruch 1, **dadurch gekennzeichnet,**
a) **dass** die Sensoren (10-13) mit elektrischer Energie betrieben werden,
b) **dass** die Sensoren (10-13) von der Sammeleinrichtung (14) mit der zum Betrieb erforderlichen elektrischen Energie versorgt werden, und
c) **dass** das Übertragungssystem (21) zusätzlich zu der Übertragung der Daten auch die elektrische Energie zum Betrieb der Sensoren (10-13) an die Sammeleinrichtung (14) liefert, damit die Sammeleinrichtung (14) die Sensoren (10-13) mit der zum Betrieb erforderlichen elektrischen Energie versorgen kann.

3. Beschichtungseinrichtung (1) nach Anspruch 1, **dadurch gekennzeichnet,**
a) **dass** die Sensoren (10-13) mit elektrischer Energie betrieben werden,
b) **dass** die Sensoren (10-13) von der Sammeleinrichtung (14) mit der zum Betrieb erforderlichen elektrischen Energie versorgt werden, insbesondere als autarke Stromversorgung mit einer Batterie, einem Akku, einem mechanischen Druckluftgenerator, einem optischen Stromgenerator, insbesondere mit Solarzellen, und
c) **dass** in dem Schutzbereich (8) eine Stromversorgung (15) angeordnet ist, insbesondere als Batterie,
c1) wobei die Stromversorgung (15) in dem Schutzbereich (8) die Sensoren (10-13) über die Sammeleinrichtung (14) mit der zum Betrieb erforderlichen elektrischen Energie versorgt, und
c2) wobei die Stromversorgung (15) in dem Schutzbereich (8) zur Gewährleistung eines Explosionsschutzes eigensicher ist, insbesondere gemäß den technischen Normen IEC/EN 60079-11- Teil 11, IEC/EN 60079-25 - Teil 25 und/oder IEC/EN 60079-14-Teil 14.

4. Beschichtungseinrichtung (1) nach einem der vorhergehenden Ansprüche, **dadurch gekennzeichnet, dass** das Übertragungssystem (17, 21) mindestens einen Lichtwellenleiter aufweist, um die Datenschnittstelle (16) in dem ungeschützten Bereich (9) mit der Sammeleinrichtung (14) in dem Schutzbereich (8) zu verbinden und dabei eine elektrische Potenzialtrennung zwischen der Datenschnittstelle (16) und der Sammeleinrichtung (14) zu bewirken.

5. Beschichtungseinrichtung (1) nach einem der Ansprüche 1 bis 3, **dadurch gekennzeichnet, dass** das Übertragungssystem (17, 21) leitungslos arbeitet, um eine elektrische Potenzialtrennung zwischen der Datenschnittstelle (16) und der Sammeleinrichtung (14) zu bewirken, insbesondere mit
a) einer induktiven Kopplung,
b) einer resonant-induktiven Kopplung oder
c) einer kapazitiven Kopplung.

6. Beschichtungseinrichtung (1) nach Anspruch 5, **dadurch gekennzeichnet, dass** das Übertragungssystem (17, 21) folgende Bauteile aufweist:
a) eine Sendespule (22) zur induktiven Kopplung,
b) einen Oszillator (26) zur Ansteuerung de Sendespule mit einem Wechselspannungssignal,
c) einen senderseitigen Resonanzkreis (24), der mit der Sendespule (22) gekoppelt ist,
d) eine Empfangsspule (23) zur induktiven Kopplung mit der Sendespule (22),
e) einen empfängerseitigen Resonanzkreis (25), der mit der Empfangsspule (23) gekoppelt ist, und/oder
f) einen Gleichrichter (27) zur Gleichrichtung des in die Empfangsspule (23) eingekoppelten Signals.

7. Beschichtungseinrichtung (1) nach Anspruch 6,
**dadurch gekennzeichnet,**
a) **dass** das Übertragungssystem (17, 21) mindestens teilweise in dem distalen Roboterarm (5) angeordnet ist, insbesondere mit folgenden Komponenten:
a1) der Sendespule (22),
a2) dem Oszillator (26),
a3) dem senderseitigen Resonanzkreis (24),
a4) dem empfängerseitigen Resonanzkreis (25),
a5) der Empfangsspule (23), und/oder
a6) dem Gleichrichter (27), und/oder
b) **dass** die Beschichtungseinrichtung (1) zur elektrostatischen Beschichtungsmittelaufladung eine Hochspannungskaskade aufweist, die vorzugsweise in dem proximalen Roboterarm angeordnet ist, und/oder
c) **dass** in dem ungeschützten Bereich (9) ein Sensor (18) angeordnet ist, insbesondere ein Schwingungssensor.

8. Beschichtungseinrichtung (1) nach einem der vorhergehenden Ansprüche, **dadurch gekennzeichnet, dass** die Sensoren (10-13) mindestens einen der folgenden Sensoren (10-13) umfassen:
a) Drucksensor, insbesondere an einer Dosierpurnpe, die das Beschichtungsmittel dosiert,
b) Strömungssensor,
c) Drehzahlsensor,
d) Kraftsensor,
e) Beschleunigungssensor,
f) Vibrationssensor,
g) Temperatursensor,

9. Beschichtungseinrichtung (1) nach einem der vorhergehenden Ansprüche, **dadurch gekennzeichnet, dass** die die Datenschnittstelle (16) mindestens eine der folgenden Schnittstellentypen bereitstellt:
a) Ethernet-Schnittstelle,
b) Bluetooth-Schnittstelle,
c) USB-Schnittstelle,
d) IO-Link,
e) Lichtwellenleiter-Schnittstelle,
f) eine Analog-Schnittstelle, insbesondere zur Übertragung von Temperaturmesswerten,
g) einen Digital-Schnittstelle,
h) Ethernet-basierende Feldbussysteme,
i) analoge In/Out-Schnittstellen,
j) digitale In/Out-Schnittstellen.

10. Beschichtungseinrichtung (1) nach einem der vorhergehenden Ansprüche,
**dadurch gekennzeichnet,**
a) **dass** die Sammeleinrichtung (14) digital mit den einzelnen Sensoren (10-13) kommuniziert, und/oder
b) **dass** in dem ungeschützten Bereich (9) eine Stromversorgung (19) für die Datenschnittstelle (16) angeordnet ist, wobei die Stromversorgung (19) in dem ungeschützten Bereich (9) zur Gewährleistung eines Explosionsschutzes eigensicher ist, insbesondere gemäß den technischen Normen IEC/EN 60079-11-Teil 11, IEC/EN 60079-25-Teil 25 und/oder IEC/EN 60079-14 - Teil 14.

11. Beschichtungseinrichtung (1) nach einem der vorhergehenden Ansprüche, **dadurch gekennzeichnet,**
a) **dass** die Beschichtungseinrichtung (1) eine Dosierpumpe (28) aufweist, die das Beschichtungsmittel dosiert und im Betrieb einen Eingangsdruck und einen Ausgangsdruck aufweist,
b) **dass** die Dosierpumpe (28) in dem Schutzbereich (8) angeordnet ist,
c) **dass** einer der Sensoren (10-13) ein Drucksensor ist, der den Ausgangsdruck der Dosierpumpe (28) misst,
d) **dass** einer der Sensoren (10-13) ein Drucksensor ist, der den Eingangsdruck der Dosierpumpe (28) misst,
e) **dass** optional einer der Sensoren (10-13) ein Temperatursensor ist, der eine Beschichtungsmitteltemperatur misst, vorzugsweise an oder in der Dosierpumpe (28).

## Claims

1. Coating device (1) for coating components with a coating agent, having
a) a protected area (8) which is explosion-proof and/or is under high voltage during operation,
b) an unprotected area (9) which is not explosion-protected and/or is at earth potential during operation,
c) several sensors (10-13) for measuring process variables of the coating device (1), wherein the sensors (10-13) are arranged in the protected area (8),
d) a data interface (16) for external data communication, the data interface (16) being arranged in the unprotected area (9), and
e) a transmission system (17, 21) for transmitting data between the sensors (10-13) in the protected area (8) on the one hand and the data interface (16) in the unprotected area (9) on the other hand,
f) a collecting device (14), wherein the collecting device (14)
f1) is being arranged in the protected area (8),
f2) is connected on the one hand to the sensors (10-13) and receives measured values of the process variables from the sensors (10-13), and
f3) on the other hand is connected to the transmission system (17, 21) in order to transmit the measured values of the sensors (10-13) to the data interface (16),
g) a coating robot (1) with a proximal robot arm (4) and a distal robot arm (5), wherein the protected area (8) is arranged at least partially in the distal robot arm (5), while the unprotected area (9) is arranged at least partially in the proximal robot arm (4), and
h) an insulating section in the distal robot arm (5) between the protected area (8) and the unprotected area (9),
**characterized in**
i) **that** the insulating section is a partition wall made of plastic.

2. Coating device (1) according to claim 1, **characterized in,**
a) **that** the sensors (10-13) are operated with electrical energy,
b) **that** the sensors (10-13) are supplied with the electrical energy required for operation by the collecting device (14), and
c) **that** the transmission system (21), in addition to transmitting the data, also supplies the electrical energy for operating the sensors (10-13) to the collecting device (14) so that the collecting device (14) can supply the sensors (10-13) with the electrical energy required for operation.

3. Coating device (1) according to claim 1, **characterized in,**
a) **that** the sensors (10-13) are operated with electrical energy,
b) **that** the sensors (10-13) are supplied with the electrical energy required for operation by the collecting device (14), in particular as a self-sufficient power supply with a battery, an accumulator, a mechanical compressed air generator, an optical current generator, in particular with solar cells, and
c) **that** a power supply (15) is arranged in the protected area (8), in particular as a battery,
c1) wherein the power supply (15) in the protected area (8) supplies the sensors (10-13) with the electrical energy required for operation via the collecting device (14), and
c2) wherein the power supply (15) in the protected area (8) is intrinsically safe to ensure explosion protection, in particular in accordance with the technical standards IEC/EN 60079-11 - Part 11, IEC/EN 60079-25 - Part 25 and/or IEC/EN 60079-14 - Part 14.

4. Coating device (1) according to one of the preceding claims, **characterized in that** the transmission system (17, 21) comprises at least one optical waveguide for connecting the data interface (16) in the unprotected area (9) to the collecting device (14) in the protected area (8) and thereby effecting an electrical potential separation between the data interface (16) and the collecting device (14).

5. Coating device (1) according to one of claims 1 to 3, **characterized in that** the transmission system (17, 21) operates wirelessly in order to effect an electrical potential separation between the data interface (16) and the collecting device (14), in particular with
a) an inductive coupling,
b) a resonant-inductive coupling or
c) a capacitive coupling.

6. Coating device (1) according to claim 5, **characterized in that** the transmission system (17, 21) comprises the following components:
a) a transmitting coil (22) for inductive coupling,
b) an oscillator (26) for driving the transmitting coil with an AC voltage signal,
c) a transmitter-side resonant circuit (24) coupled to the transmitting coil (22),
d) a receiving coil (23) for inductive coupling with the transmitting coil (22),
e) a receiver-side resonant circuit (25) coupled to the receiving coil (23), and/or
f) a rectifier (27) for rectifying the signal coupled into the receiving coil (23).

7. Coating device (1) according to claim 6, **characterized in,**
a) **that** the transmission system (17, 21) is arranged at least partially in the distal robot arm (5), in particular with the following components:
a1) the transmitting coil (22),
a2) the oscillator (26),
a3) the transmitter-side resonant circuit (24),
a4) the receiver-side resonant circuit (25),
a5) the receiving coil (23), and/or
a6) the rectifier (27), and/or
b) **that** the coating device (1) for electrostatic coating agent charging comprises a high-voltage cascade which is preferably arranged in the proximal robot arm, and/or
c) **that** a sensor (18) is arranged in the unprotected area (9), in particular a vibration sensor.

8. Coating device (1) according to one of the preceding claims, **characterized in that** the sensors (10-13) comprise at least one of the following sensors (10-13):
a) pressure sensor, in particular on a metering pump that meters the coating agent,
b) flow sensor,
c) speed sensor,
d) force sensor,
e) acceleration sensor,
f) vibration sensor,
g) temperature sensor.

9. Coating device (1) according to any of the preceding claims, **characterized in that** the data interface (16) provides at least one of the following interface types:
a) Ethernet interface,
b) Bluetooth interface,
c) USB interface,
d) IO-Link,
e) optical waveguide interface,
f) an analog interface, in particular for the transmission of measured temperature values,
g) a digital interface,
h) Ethernet-based fieldbus systems,
i) analog in/out interfaces,
j) digital in/out interfaces.

10. Coating device (1) according to any of the preceding claims, **characterized in,**
a) **that** the collecting device (14) communicates digitally with the individual sensors (10-13), and/or
b) **that** a power supply (19) for the data interface (16) is arranged in the unprotected area (9), the power supply (19) in the unprotected area (9) being intrinsically safe to ensure explosion protection, in particular in accordance with the technical standards IEC/EN 60079-11 - Part 11, IEC/EN 60079-25 - Part 25 and/or IEC/EN 60079-14 - Part 14.

11. Coating device (1) according to one of the preceding claims, **characterized in**
a) **that** the coating device (1) comprises a metering pump (28) which meters the coating agent and, in operation, comprises an inlet pressure and an outlet pressure,
b) **that** the metering pump (28) is arranged in the protected area (8),
c) **that** one of the sensors (10-13) is a pressure sensor which measures the output pressure of the metering pump (28),
d) **that** one of the sensors (10-13) is a pressure sensor which measures the inlet pressure of the metering pump (28),
e) **that** optionally one of the sensors (10-13) is a temperature sensor measuring a coating agent temperature, preferably at or in the metering pump (28).

## Revendications

1. Dispositif de revêtement (1) pour le revêtement de composants avec un produit de revêtement, comprenant :
a) une zone de protection (8), qui est antidéflagrante et/ou sous haute tension en fonctionnement ;
b) une zone non protégée (9), qui n'est pas antidéflagrante et/ou est au potentiel de terre en fonctionnement ;
c) plusieurs capteurs (10-13) pour la mesure de grandeurs de processus du dispositif de revêtement (1), les capteurs (10-13) étant disposés dans la zone de protection (8) ;
d) une interface de données (16) pour la communication de données externe, l'interface de données (16) étant disposée dans la zone non protégée (9) ; et
e) un système de transmission (17, 21) pour la transmission de données entre les capteurs (10-13) dans la zone de protection (8) d'une part et l'interface de données (16) dans la zone non protégée (9) d'autre part ;
f) un dispositif collecteur (14), le dispositif collecteur (14) :
f1) étant disposé dans la zone de protection (8) ;
f2) étant connecté d'une part aux capteurs (10-13) et recevant des valeurs de mesure des grandeurs de processus des capteurs (10-13) ; et
f3) étant connecté d'autre part au système de transmission (17, 21) pour transmettre les valeurs de mesure des capteurs (10-13) à l'interface de données (16) ;
g) un robot de revêtement (1) avec un bras de robot proximal (4) et un bras de robot distal (5), la zone de protection (8) étant au moins partiellement disposée dans le bras de robot distal (5), tandis que la zone non protégée (9) est au moins partiellement disposée dans le bras de robot proximal (4) ; et
h) un passage d'isolation dans le bras de robot distal (5) entre la zone de protection (8) et la zone non protégée (9) ;
**caractérisé en ce que** :
i) le passage d'isolation est une cloison en plastique.

2. Dispositif de revêtement (1) selon la revendication 1, **caractérisé en ce que** :
a) les capteurs (10-13) sont alimentés en énergie électrique ;
b) les capteurs (10-13) sont alimentés en énergie électrique nécessaire à leur fonctionnement par le dispositif collecteur (14) ; et
c) le système de transmission (21), en plus de la transmission des données, fournit également l'énergie électrique nécessaire au fonctionnement des capteurs (10-13) au dispositif collecteur (14), afin que le dispositif collecteur (14) puisse alimenter les capteurs (10-13) en énergie électrique nécessaire à leur fonctionnement.

3. Dispositif de revêtement (1) selon la revendication 1, **caractérisé en ce que** :
a) les capteurs (10-13) sont alimentés en énergie électrique ;
b) les capteurs (10-13) sont alimentés en énergie électrique nécessaire à leur fonctionnement par le dispositif collecteur (14), en particulier comme alimentation électrique autonome avec une batterie, un accumulateur, un générateur d'air comprimé mécanique, un générateur de courant optique, en particulier avec des cellules solaires ; et
c) une alimentation électrique (15) est disposée dans la zone de protection (8), en particulier comme batterie,
c1) l'alimentation électrique (15) dans la zone de protection (8) alimentant les capteurs (10-13) via le dispositif collecteur (14) en énergie électrique nécessaire à leur fonctionnement ; et
c2) l'alimentation électrique (15) dans la zone de protection (8) étant à sécurité intrinsèque pour garantir une protection contre les explosions, en particulier selon les normes techniques IEC/EN 60079-11 - Partie 11, IEC/EN 60079-25 - Partie 25 et/ou IEC/EN 60079-14 - Partie 14.

4. Dispositif de revêtement (1) selon l'une des revendications précédentes, **caractérisé en ce que** le système de transmission (17, 21) comprend au moins un guide d'ondes optiques pour connecter l'interface de données (16) dans la zone non protégée (9) au dispositif collecteur (14) dans la zone de protection (8) et ainsi réaliser une séparation de potentiel électrique entre l'interface de données (16) et le dispositif collecteur (14).

5. Dispositif de revêtement (1) selon l'une des revendications 1 à 3, **caractérisé en ce que** le système de transmission (17, 21) fonctionne sans fil pour réaliser une séparation de potentiel électrique entre l'interface de données (16) et le dispositif collecteur (14), en particulier avec :
a) un couplage inductif ;
b) un couplage inductif résonnant ; ou
c) un couplage capacitif.

6. Dispositif de revêtement (1) selon la revendication 5, **caractérisé en ce que** le système de transmission (17, 21) comprend les composants suivants :
a) une bobine émettrice (22) pour le couplage inductif ;
b) un oscillateur (26) pour commander la bobine émettrice avec un signal de tension alternative ;
c) un circuit résonnant côté émetteur (24), qui est couplé à la bobine émettrice (22) ;
d) une bobine réceptrice (23) pour le couplage inductif avec la bobine émettrice (22) ;
e) un circuit résonnant côté récepteur (25), qui est couplé à la bobine réceptrice (23) ; et/ou
f) un redresseur (27) pour le redressement du signal couplé dans la bobine réceptrice (23).

7. Dispositif de revêtement (1) selon la revendication 6, **caractérisé en ce que** :
a) le système de transmission (17, 21) est au moins partiellement disposé dans le bras de robot distal (5), en particulier avec les composants suivants :
a1) la bobine émettrice (22) ;
a2) l'oscillateur (26) ;
a3) le circuit résonnant côté émetteur (24) ;
a4) le circuit résonnant côté récepteur (25) ;
a5) la bobine réceptrice (23) ; et/ou
a6) le redresseur (27) ; et/ou
b) le dispositif de revêtement (1) pour la charge électrostatique de le produit de revêtement présente une cascade haute tension, qui est de préférence disposée dans le bras de robot proximal ; et/ou
c) un capteur (18) est disposé dans la zone non protégée (9), en particulier un capteur de vibration.

8. Dispositif de revêtement (1) selon l'une des revendications précédentes, **caractérisé en ce que** les capteurs (10-13) comprennent au moins un des capteurs (10-13) suivants :
a) capteur de pression, en particulier sur une pompe de dosage qui dose le produit de revêtement ;
b) capteur de débit ;
c) capteur de vitesse de rotation ;
d) capteur de force ;
e) capteur d'accélération ;
f) capteur de vibration ;
g) capteur de température.

9. Dispositif de revêtement (1) selon l'une des revendications précédentes, **caractérisé en ce que** l'interface de données (16) fournit au moins un des types d'interface suivants :
a) interface Ethernet ;
b) interface Bluetooth ;
c) interface USB ;
d) IO-Link ;
e) interface à fibre optique ;
f) interface analogique, en particulier pour la transmission de valeurs de mesure de température ;
g) interface numérique ;
h) systèmes de bus de terrain basés sur Ethernet ;
i) interfaces analogiques d'entrée/sortie ;
j) interfaces numériques d'entrée/sortie.

10. Dispositif de revêtement (1) selon l'une des revendications précédentes, **caractérisé en ce que** :
a) le dispositif collecteur (14) communique numériquement avec les capteurs individuels (10-13) ; et/ou
b) une alimentation électrique (19) pour l'interface de données (16) est disposée dans la zone non protégée (9), l'alimentation électrique (19) dans la zone non protégée (9) étant à sécurité intrinsèque pour garantir une protection contre les explosions, en particulier selon les normes techniques IEC/EN 60079-11 - Partie 11, IEC/EN 60079-25 - Partie 25 et/ou IEC/EN 60079-14 - Partie 14.

11. Dispositif de revêtement (1) selon l'une des revendications précédentes, **caractérisé en ce que** :
a) le dispositif de revêtement (1) comprend une pompe de dosage (28) qui dose le produit de revêtement et présente une pression d'entrée et une pression de sortie en fonctionnement ;
b) la pompe de dosage (28) est disposée dans la zone de protection (8) ;
c) l'un des capteurs (10-13) est un capteur de pression qui mesure la pression de sortie de la pompe de dosage (28) ;
d) l'un des capteurs (10-13) est un capteur de pression qui mesure la pression d'entrée de la pompe de dosage (28) ;
e) éventuellement, l'un des capteurs (10-13) est un capteur de température qui mesure une température de produit de revêtement, de préférence sur ou dans la pompe de dosage (28).
